# FASCICULE DE BREVET EUROPEEN

(11) **EP 0 524 898 B1**
(45) Date de publication et mention de la délivrance du brevet: **30.11.1994**
(21) Numéro de dépôt: 92420251.8
(22) Date de dépôt: 24.07.1992
(51) Int. Cl.: B65G 47/14, B65G 47/256

(54) **Dispositif d'orientation automatique de pièces d'assemblage à extrémités non symétriques en vue de leur transfert entre un organe de stockage en vrac et un appareil distributeur**
Automatische Ausrichtvorrichtung für Montageteile mit unsymmetrischen Enden hinsichtlich ihrer Überführung zwischen einem Schüttgutspeicher und einem Ausgabegerät
Automatic orienting device for assembly parts having asymmetric ends with respect to their transfer between a reservoir for bulk goods and a dispensing apparatus

(30) Priorité: 26.07.1991 FR 9109830
(43) Date de publication de la demande: 27.01.1993
(73) Titulaire: TECNIMODERN AUTOMATION S.A., F-42600 Montbrison (FR)
(72) Inventeur: Chrétien, Georges, F-42600 Montbrison (FR)
(74) Mandataire: Dupuis, François

(56) Documents cités:
- DD-A- 249 232
- DE-A- 1 948 473
- US-A- 3 489 262
- US-A- 3 517 795
- PATENT ABSTRACTS OF JAPAN vol. 8, no. 152 (M-309)(1589) 14 Juillet 1984; & JP-A-59 048322

## Description

L'objet de l'invention se rattache au secteur technique des dispositifs de transport et d'alimentation d'objets allongés, notamment d'organes d'assemblage.

Il est bien connu de stocker en vrac des pièces d'assemblage telles que vis, rivets, goupilles... dans des réceptacles du type bois vibrants par exemple, afin de les acheminer les unes à la suite des autres vers un poste de distribution.

Lorsque ces pièces ont leurs deux extrémités identiques et peuvent être distribuées indifféremment d'un côté ou de l'autre, l'acheminement à partir du réceptacle de stockage en vrac jusqu'à l'appareil de distribution automatisée (visseuse, riveteuse...) ne pose pas de problèmes particuliers.

Par contre, si les pièces d'assemblage ont des extrémités non symétriques (vis à tête, vis sans tête, rivets...) , il est nécessaire d'orienter ces pièces toujours dans le même sens à la sortie du réceptacle de stockage.

Pour cela, on a déjà proposé des solutions qui sont soit spécifiques à une seule catégorie de pièces, ce qui oblige à concevoir autant de machine qu'il y a de pièces différentes à distribuer, soit ces machines acceptent avec, peu ou pas de modifications, plusieurs catégories de pièces, et alors il est évident qu'elles ne peuvent avoir une efficacité et une fiabilité optimum.

Cet état de la technique peut être illustré par l'enseignement du brevet allemand 1948473. Ce brevet décrit un dispositif qui comprend un organe rotatif interposé entre la sortie d'un réceptacle de stockage de pièces disposées en vrac, et un système d'alimentation d'un appareil de distribution à l'unité. L'organe rotatif est agencé pour recevoir plusieurs pièces à distribuer avec des extrémités différentes pour les distribuer vers l'alimentation de l'appareil distributeur si les pièces sont orientées dans le bon sens d'utilisation. A défaut, les pièces sont rejetées et dirigées de nouveau dans le réceptacle de stockage.

La solution divulguée dans ce brevet n'est cependant pas satisfaisante. L'organe rotatif est disposé horizontalement et nécessite des moyens mécaniques pour l'évacuation des pièces. En outre, l'entrainement de l'organe rotatif s'effectue par un système relativement complexe.

On connait également par le brevet JP 59048322 on dispositif selecteur de pièces à partir d'un bol vibrent, et comprenant un disque rotatif avec plusieurs evidements recepteurs de pieces - cependent ce dispositif n'est pas directement applicable à l'invention.

L'invention s'est fixée pour but de remédier à ces inconvénients, d'une manière simple, sûre et efficace.

Le problème que se propose de résoudre l'invention est d'autoriser de manière fiable, rapide, simple et économique, l'orientation automatique d'une extrémité de pièce de différentes configuration, entre un moyen de stockage en vrac et un appareil de distribution en ayant pour objectif d'avoir un chargement horizontal et une évacuation verticale par gravité des pièces, sans aucune action mécanique.

Pour résoudre un tel problème il a été conçu et mis au point un dispositif d'orientation automatique de pièces d'assemblage à extrémités non symétriques selon la revendication 1.

Avantageusement, l'entrée des pièces dans l'organe rotatif, leur rejet dans le réceptacle de stockage et/ou leur acheminement vers l'appareil distributeur sont soumis à l'action de jets d'air pulsé judicieusement disposés.

L'invention est exposée ci-après plus en détail à l'aide des dessins annexés, dans lesquels :
La figure 1 est une vue en plan illustrant schématiquement le dispositif selon l'invention associé à un réceptacle de stockage en vrac du type bol vibrant.
La figure 2 est une vue en coupe considérée suivant la ligne 2.2 de la figure 1, illustrant principalement l'organe rotatif et le transfert des pièces.
La figure 3 est une vue en coupe considérée suivant la ligne 3.3 de la figure 2, montrant l'organe rotatif et ses moyens de commande et de transmission selon un exemple de réalisation.
La figure 4 est une vue en coupe considérée suivant la ligne 4.4 de la figure 3, montrant le moyen de transmission de l'organe rotatif.
Les figures 5 et 6 sont des vues partielles en coupe illustrant respectivement une vis sans tête disposée dans le bon sens et dans le mauvais sens à l'intérieur de l'organe rotatif.
La figure 7 est une vue en coupe partielle montrant une variante de réalisation de l'organe rotatif adaptée au transfert de vis pointeau.
La figure 8 est une vue partielle en perspective illustrant deux vis sans tête logées dans l'organe rotatif dans le bon sens et dans le mauvais sens.
La figure 9 est une vue illustrant un autre type de vis accepté par l'organe rotatif.

Dans l'exemple illustré, le dispositif (D) selon l'invention est appliqué au transfert avec orientation automatique, de vis entre un réceptacle de stockage en vrac du type bol vibrant (B) et une visseuse pneumatique (non illustrée), mais il est bien évident que le dispositif (D) peut être appliqué à d'autres pièces d'assemblage et interposé entre d'autres types de réceptacle en vrac et d'autres machines ou appareils de distribution ordonnée.

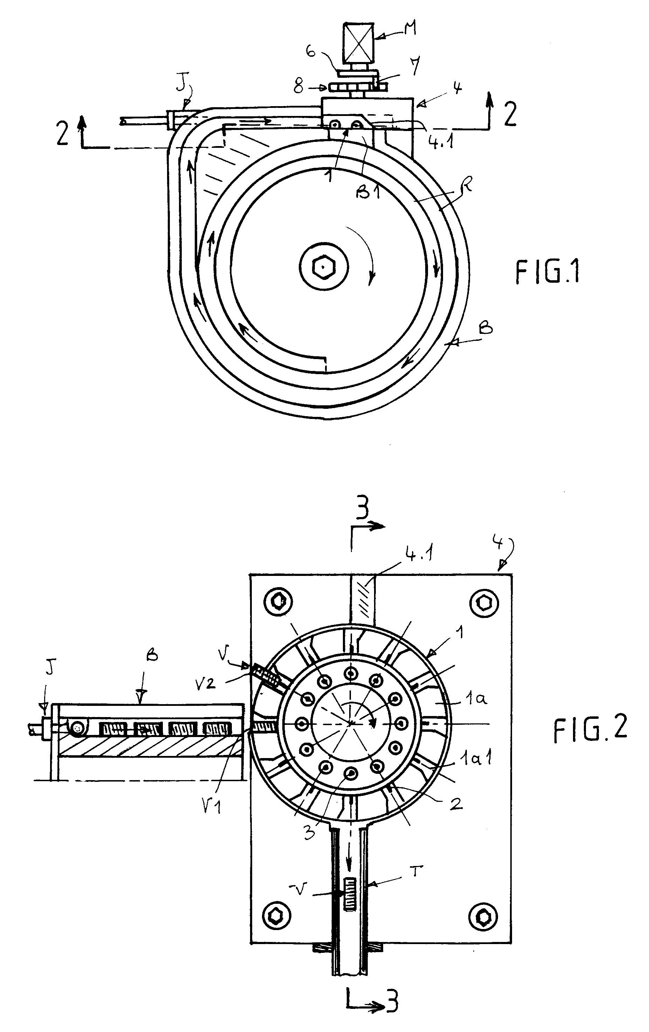

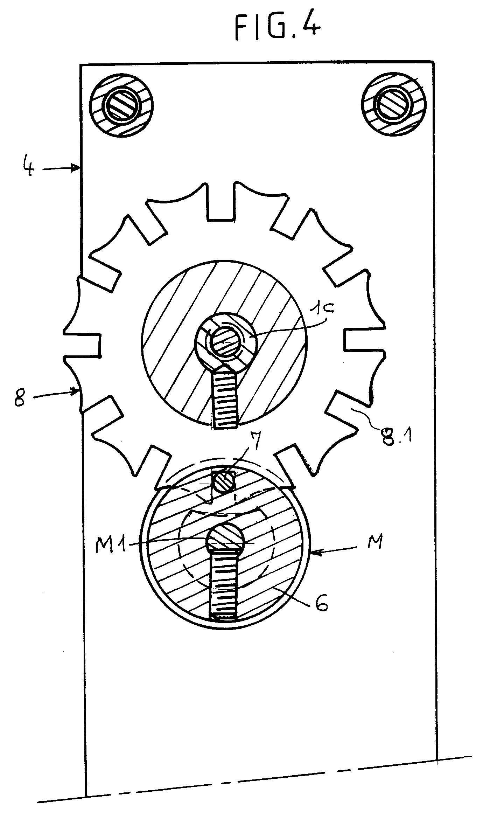

Le dispositif illustré à titre d'exemple aux figures 1 à 6 et 8, est destiné à recevoir des vis sans tête (V) présentant des extrémités non symétriques, c'est-à-dire une extrémité plate (V1) chanfreinée pour l'engagement dans un taraudage, et une extrémité de manoeuvre avec un six pans creux (V2) de blocage par une clé mâle à six pans.

De manière connue, les vis (V) soumises à l'action du bol vibrant sont amenées progressivement sur la rampe hélicoïdale (R) de la paroi du bol jusqu'au niveau supérieur où la rampe s'écarte de l'hélice.

A ce stade, les vis sont sensiblement jointives et se présentent indifféremment avec leur extrémité d'entrée (V1) en avant et en arrière. Pour qu'elles soient distribuées une à une à l'appareil ou machine en aval, avec toujours leur extrémité (V1) en avant, cela par l'intermédiaire d'une tubulure souple (T), il est donc nécessaire d'opérer entre ladite tubulure et la sortie du bol vibrant une sélection des vis, afin d'accepter celles qui sont dans le bon sens et d'éliminer celles qui sont dans le mauvais sens.

Pour cela, on interpose entre la sortie du bol (B) et la tubulure (T), le dispositif (D) selon l'invention qui est constitué essentiellement par une pièce cylindrique étagée (1) comprenant successivement une portée cylindrique (1a) de diamètre (d1), un épaulement cylindrique (1b) de diamètre inférieur (d2), et une queue cylindrique (1c) de petit diamètre (d3) destinée à relier la pièce (1) à un moyen de commande en rotation (M).
D'une manière importante, l'axe d'entrainement (1c) est disposé horizontalement, de sorte que la pièce cylindrique (1) est disposée dans un plan vertical.

La portée cylindrique (1a) se présente sous la forme d'un barillet, en ce sens qu'elle est aménagée sur sa périphérie avec des cavités radiales (1a1) régulièrement réparties à entrée chanfreinée et à paroi demi-circulaire, ces cavités débouchant sur la face frontale. Au fond des cavités, des tiges ou aiguilles (2) introduites dans des orifices (1a2) par un évidement (1a3) de la pièce (1), sont bloquées en position de débordement à l'intérieur des cavités par des vis frontales (3). La hauteur (h1) des cavités et la hauteur (h2) de débordement des aiguilles, sont calculées de telle sorte que lorsqu'une vis (V) est introduite dans une cavité avec son extrémité à six pans creux (V2) en avant, ladite extrémité coiffe l'aiguille débordante.

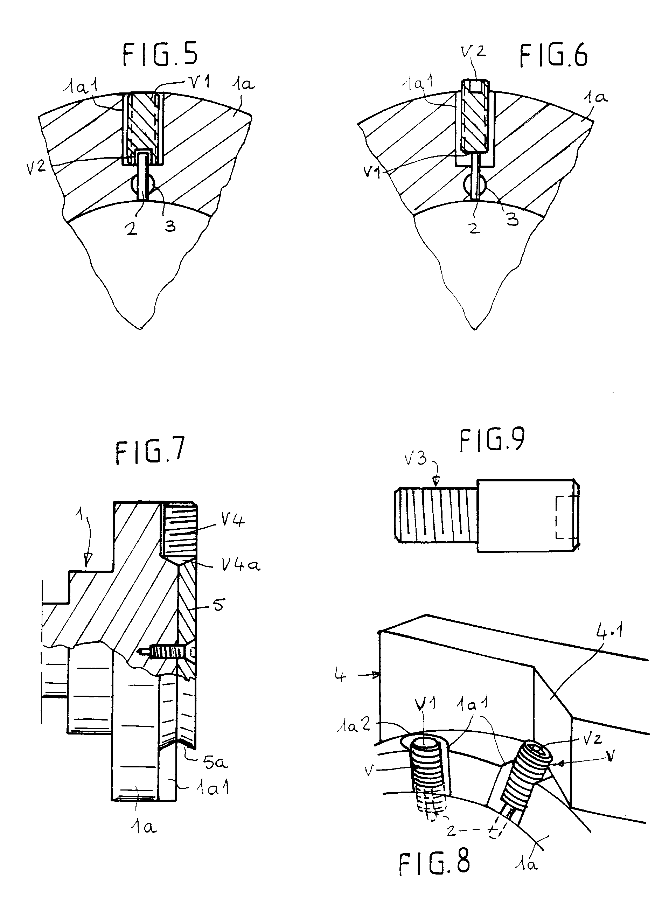

Dans cette position (illustrée à la figure 5), la vis est dans le bon sens d'utilisation ultérieure et son extrémité opposée (V2) ne déborde pas de la périphérie du barillet. Comme on le voit à la figure 2, la vis ainsi logée dans sa cavité, peut être transférée par rotation du barillet, dans la tubulure (T) positionnée dans l'axe du barillet en partie inférieure. Comptetenu du positionnement vertical du barillet (1), la vis tombe automatiquement par gravité dans la tubulure (T). Il apparait donc qu'aucun organe d'éjection n'est nécessaire.

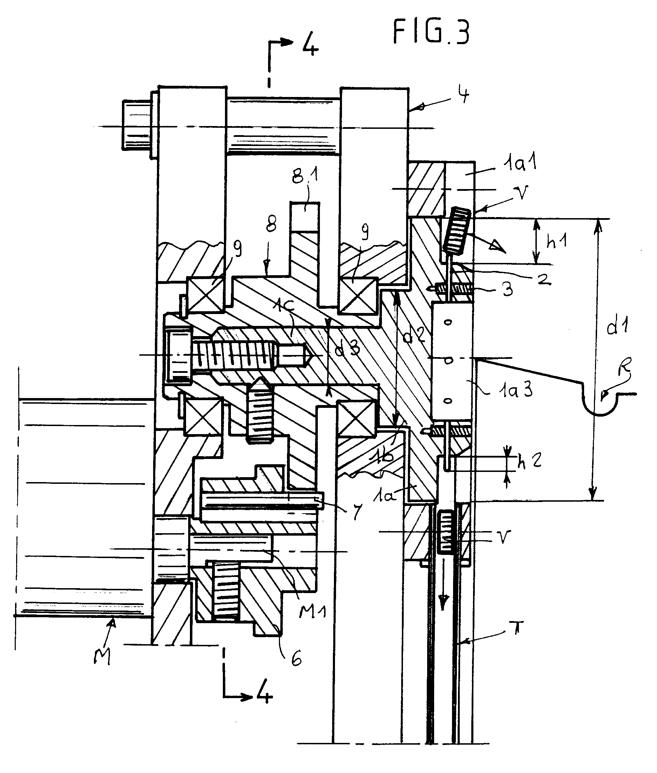

Lorsque la vis (V) est introduite dans une cavité avec son extrémité plate (V1) en avant (figure 6), ladite extrémité bute sur l'aiguille (2), de sorte que la vis déborde de la périphérie du barillet (1). L'entrainement en rotation du barillet a pour effet d'éjecter la vis dans le sens de l'ouverture frontale de la cavité par une rampe (4.1) exécutée sur un bâti-support (4) dans lequel est monté à rotation le barillet (figures 2, 3, 8). La vis éjectée par la rampe (4.1) retombe par une goulotte (B1) dans le bol vibrant (B) (figures 1 et 3), afin d'être de nouveau acheminée par la rampe (R).

Bien entendu, selon la forme et les dimensions des pièces à transférer (vis, rivets), les cavités du barillet ainsi que les moyens de butée, appelés aussi "détrompeurs", sont aménagés en conséquence, soit pour recevoir entièrement les pièces introduites dans le bon sens, soit pour les laisser en débordement partiel lorsqu'elles sont dans le mauvais sens. Par exemple, la vis épaulée (V3) illustrée à la figure 9, peut être logée dans une cavité ayant la dimension de son plus grand diamètre, ladite cavité présentant en son fond, un détrompeur similaire à l'aiguille (2).

Une autre variante de réalisation du barillet est illustrée à la figure 7. Pour recevoir des vis sans tête (V4) du type pointeau, les cavités (1a1) ont un fond (1a4) en demi-cône et sur la face frontale du barillet est appliqué et bloqué un disque (5) dont la périphérie (5a) est en pente du côté de la dite face, afin de former avec les fonds (1a4) des logements pour l'extrémité (V4a) pointue de la vis (V4) qui peut ainsi être escamotée entièrement dans la cavité. Dans le sens opposé, la vis (V4) est arrêtée en débordement et peut ainsi être éjectée par la rampe (4.1).

Comme on le voit encore à la figure 1, l'introduction des vis ou autres pièces dans le barillet, peut être aidée par un jet d'air pulsé (J). On peut également prévoir des jets d'air pour activer l'éjection des pièces par la rampe ou leur introduction dans la tubulure (T).

La pièce (1) ou dispositif rotatif ainsi conçu, est monté de manière démontable dans le bâti-support afin d'être adaptée au type de pièces à distribuer. On peut ainsi, à partir d'un seul ensemble distribuer des pièces de configurations différentes.

Suivant une caractéristique importante de l'invention, l'entraînement en rotation de la pièce (1) s'effectue avec le moteur (M), en combinaison avec un moyen de transmission pas à pas interposé entre le barillet et le moteur.

Ce moyen est du type croix de Malte, c'est-à-dire que sur l'arbre (M1) de sortie du moteur, est calé angulairement une bague (6) portant de manière excentrée un doigt (7) coopérant , lors de la rotation, avec des encoches radiales (8.1) d'une roue de grand diamètre (8) portée par la bâti-support (4) par Intermédiaire de roulemenets (9). Le mécanisme à croix de Malte autorise des temps d'arrêt à chaque rotation d'un pas, en étant entrainé en continu par le moteur (M). A noter que la rampe de rejet (4.1) est disposée très sensiblement selon l'axe vertical du barillet (1) et au dessus de ces derniers pour correspondre à la vitesse maximum de la Croix de Malte.

Les avantages ressortent bien de la description.

## Revendications

1. Dispositif d'orientation automatique de pièces d'assemblage à extrémités non symétriques en vue de leur transfert entre un moyen de stockage en vrac et un appareil distributeur, le dispositif comprenant essentiellement une rampe de rejet (4-1) et un organe rotatif (1) interposé entre la sortie d'un réceptacle (B) de stockage des pièces en vrac et l'alimentaion (T) d'un appareil de distribution à l'unité ; ledit organe rotatif étant agencé radialement pour recevoir plusieurs pièces à distribuer de même catégorie et à extrémités non symétriques, les acheminer vers l'alimentation de l'appareil distributeur si elles sont dans le bon sens d'utilisation ou les rejeter et les diriger de nouveau dans le réceptacle de stockage si elles sont dans le mauvais sens d'utilisation, ledit organe rotatif (1) étant disposé verticalement, et présentant un axe horizontal (1c), ledit organe rotatif (1) d'orientation automatique des pièces, comprenant une portée cylindrique (1a) aménegée avec des cavités radiales (1a1), et chacune desdites cavités (1a1) étant aménagées avec des formes en saillie ou en creux appelées détrompeurs, destinées soit à coopérer étroitement avec une des extrémités en creux ou en relief de la pièce qui est alors entièrement logée dans la cavité, soit à servir de butée à l'autre extrémité de la pièce qui est alors logée en débordement partiel de la cavité, caractérisé en ce que axe horizontal (1c) est acccouplé à un mécanisme à croix de Malte (6) (7) (8) entrainé en continu, pour soumettre l'organe rotatif à un mouvement d'entrainement en rotation pas à pas, assurant l'évacuation, par gravité, des pièces mal orientées, en combinaison avec la rampe de rejet (4-1) convenablement disposée sur un bâti support (4) pour correspondre à la vitesse maximum de ladite croix de Malte.

2. Dispositif selon le revendication 1 caractérisé en ce que la porteé cylindrique (1a) présente une forme de barillet en ce sens qu'elle est aménagée sur sa périphérie avec lesdites cavités radiales (1a1) régulièrement réparties, à entrée chanfreinée et à paroi arrière demi-circulaire, lesdites cavités débouchant sur la face frontale et étant dimensionnées en fonction des pièces à distribuer.

3. Dispositif selon la revendication 1, caractérisé en ce que le bâti-support (4) présente dans le champ de déplacement du barillet de l'organe rotatif (1), la rampe (4-1) destinée à rejeter frontalement les pièces introduites dans le mauvais sens dans les cavités (1a1).

4. Dispositif selon la revendication 1, caractérisé en ce qu'un moteur (M) est combiné avec le mécanisme à croix de Malte, comprenant une bague (6) calée sur l'arbre de sortie dudit moteur et portant de manière excentrée, un doigt (7) coopérant, lors de la rotation, avec des encoches radiales (8a) d'une route de grand diamètre (8) montée à libre rotation sur le bâti support (4).

5. Dispositif selon la revendication 1, caractérisé en ce que l'entrée des pièces dans l'organe rotatif (1), leur rejet dans le réceptacle de stockage (B) et/ou leur acheminement vers l'appareil distributeur, sont soumis à l'action de jets d'air pulsé judicieusement disposés.

## Claims

1. Automatic orienting device for assembly parts having asymmetric ends with respect to their transfer between a reservoir for bulk goods and a dispensing apparatus, the device essentially comprising a reject ramp (4-1) and a rotary component (1) mounted between the outlet of a storage container (B) for storing bulk goods and the inlet (T) to apparatus for dispensing a single part; said rotary component being designed radially to accommodate several parts to be dispensed of the same category and with asymmetric ends, routing them to the feed of the dispensing apparatus if they are in the correct direction of use or rejecting them and directing them to the storage container if they are in the wrong direction of use, said rotary component (1) being arranged vertically and having a horizontal shaft (1c), said rotary component (1) for automatically orienting the parts comprising a cylindrical section (1a) designed with radial cavities (1a1) and each of said cavities (1a1) being made with protruding or recessed shapes called "polarisers" intended either to cooperate intimately with one of the hollow or raised ends of the part which is then completely accommodated in the cavity or to act as a limit stop for the other end of the part which is then accommodated so that it partially protrudes from the cavity, characterised in that said horizontal shaft (1c) is coupled to a Maltese cross mechanism (6) (7) (8) which is continuously driven in order to subject the rotary component to a rotational drive movement ensuring removal, by the effect of gravity, of parts that are incorrectly oriented in combination with the reject ramp (4-1) suitably arranged on a mounting frame (4) so that it corresponds to the maximum speed of said Maltese cross.

2. Device as claimed in claim 1 characterised in that the cylindrical section (1a) has a spring barrel shape in the sense that its peripheral part is designed with said evenly distributed radial cavities (1a1) with a chamfered inlet and a semicircular rear wall, said cavities opening out into the front surface and being dimensioned according to the parts to be dispensed.

3. Device as claimed in claim 1 characterised in that the mounting frame (4) has, in the area of movement of the spring barrel of the rotary component (1), the ramp (4-1) intended to reject, at the front, any parts inserted into the cavities (1a1) in the wrong direction.

4. Device as claimed in claim 1 characterised in that a motor (M) is combined with the Maltese cross mechanism comprising a ring (6) locked on the output shaft of said motor and having an eccentric pin (7) that cooperates, as it rotates, with radial slots (8a) in a large-diameter wheel (8) mounted so that it rotates freely on the mounting frame (4).

5. Device as claimed in claim 1 characterised in that the entry of the parts in the rotary component (1), their rejection in storage container (B) and/or their routing to the dispensing apparatus are subjected to the action of carefully arranged jets of forced air.

## Patentansprüche

1. Automatische Ausrichtvorrichtung für Montageteile mit unsymmetrischen Enden hinsichtlich ihrer Überführung zwischen einem Schüttgutspeicher und einem Ausgabegerät, wobei die Vorrichtung im wesentlichen aus einer Ausstoßrampe (4-1) und einem Drehorgan (1) besteht, das zwischen dem Ausgang eines Lagerbehälters (B) der Schüttgutteile und der Beschickung (T) eines Einzelausgabegerätes gelagert ist; dabei ist das besagte Drehorgan radial angeordnet, um mehrere auszugebende Montageteile der gleichen Kategorie mit unsymmetrischen Enden aufzunehmen und sie der Beschickung des Ausgabegeräts zuzuführen, wenn sie in der richtigen Gebrauchsrichtung liegen, bzw. sie auszustoßen und erneut in den Lagerbehälter zu führen, wenn sie in der falschen Gebrauchsrichtung liegen, wobei das besagte Drehorgan (1) senkrecht angeordnet ist und eine waagrechte Achse (1c) besitzt, während das besagte Drehorgan (1) für die automatische Ausrichtung der Teile eine zylindrische Auflagefläche (1a) mit radialen Vertiefungen (1a1) aufweist und jede dieser Vertiefungen (1a1) mit Unverwechselbarkeitseinrichtungen genannten hervorstehenden oder eingeschnittenen Formen ausgebildet ist, die dazu bestimmt sind, entweder eng mit einem der eingeschnittenen oder hervorstehenden Enden des Teils zusammenzuwirken, das dabei ganz in der Vertiefung sitzt, oder als Anschlag für das andere Ende des Teils zu dienen, das dabei teilweise aus der Vertiefung herausragt, dadurch gekennzeichnet, daß die besagte waagrechte Achse (1c) an ein kontinuierlich angetriebenes Malteserkreuzgetriebe (6) (7) (8) angekoppelt ist, um das Drehorgan einer Drehantriebsbewegung auszusetzen, wodurch die schwerkraftmäßige Räumung der falsch ausgerichteten Teile gewährleistet wird, und zwar in Verbindung mit der Ausstoßrampe (4-1), die auf einem Stützrahmen (4) zweckmäßig angeordnet ist, um der maximalen Geschwindigkeit des besagten Malteserkreuzes zu entsprechen.

2. Vorrichtung nach Anspruch 1, dadurch gekennzeichnet, daß die zylindrische Auflagefläche (1a) eine Revolvertrommelform aufweist, insofern sie am Rand mit den besagten gleichmäßig verteilten radialen Vertiefungen (1a1) mit abgefastem Eingang und halbkreisförmiger Rückwand ausgebildet ist, wobei die besagten Vertiefungen auf der Vorderseite münden und in Abhängigkeit von den auszugebenden Teilen dimensioniert sind.

3. Vorrichtung nach Anspruch 1, dadurch gekennzeichnet, daß der Stützrahmen (4) im Bewegungsfeld der Trommel des Drehorgans (1) die Rampe (4-1) für den frontalen Ausstoß der in falscher Richtung in die Vertiefungen (1a1) eingeführten Teile aufweist.

4. Vorrichtung nach Anspruch 1, dadurch gekennzeichnet, daß ein Motor (M) mit dem Malteserkreuzgetriebe kombiniert ist, der einen Ring (6) umfaßt, welcher an der Ausgangswelle des besagten Motors verkeilt ist, und einen exzentrisch angeordneten Stift (7) trägt, der bei der Umdrehung mit radialen Einkerbungen (8a) eines Rades mit großem Durchmesser (8) zusammenwirkt, das frei drehbar am Stützrahmen (4) angebracht ist.

5. Vorrichtung nach Anspruch 1, dadurch gekennzeichnet, daß die Einführung der Teile in das Drehorgan (1), ihr Ausstoß in den Lagerbehälter (B) und/oder ihre Zuführung zum Verteilergerät von der Einwirkung zweckmäßig angeordneter Gebläseluftstrahlen abhängig sind.
